# EUROPEAN PATENT SPECIFICATION

(11) **EP 0 387 108 B1**
(45) Date of publication and mention of the grant of the patent: **16.03.1994**
(21) Application number: 90302663.1
(22) Date of filing: 13.03.1990
(51) Int. Cl.: H02H 3/20, H02H 3/06, H04B 15/00

(54) **Eliminating the effects of voltage transients**
Elimination der Effekte von Spannungsspitzen
Elimination d'effets de tensions transitoires

(30) Priority: 10.03.1989 FI 891168
(43) Date of publication of application: 12.09.1990
(73) Proprietor: NOKIA MOBILE PHONES LTD., 24101 Salo (FI)
(72) Inventor: Ikonen, Raimo, SF-25360 Pertteli (FI); Lonka, Pekka, SF-24240 Salo (FI); Mikkola, Pekka, SF-24100 Salo (FI)
(74) Representative: Frain, Timothy John

(56) References cited:
- WO-A-87/00700
- DE-A- 3 402 222
- FR-A- 2 548 839
- GB-A- 2 033 687
- ANALOGE UND DIGITALE ÜBERTRAGUNGSTECHNIK, 1978, AEG-Telefunken, Berlin und Frankfurt am Main HANS ZIEGLER "Stromversorgungen für Trägerfrequenzsysteme" pages 114-121

## Description

This invention relates to a method and apparatus for eliminating the influence or effects of voltage transients in electrical or electronic apparatus, particularly (but not exclusively) in a TDMA system.

The invention relates to a method by which transients are eliminated in an apparatus comprising a current source and several functional blocks of which at least one consumes a pulsating current which produces transients in the operating voltage.

In apparatuses in which the consumption of current by different blocks differs greatly and in which the consumption of current may be pulse-like, transients are formed in the operating voltage. When included in the operating voltage, transients are detrimental to those functional blocks the functioning of which requires a very stable operating voltage. An especially stable operating voltage is required in digital radio telephones, for example, in a digital system based on time division multiplexing (TDMA). In this system, voltage-controlled oscillators (VCO) are used, for example, in the SAT detector and also in other blocks, in which case any transients in the supply voltage will cause great frequency deviations in the various circuits. Therefore, very strict specifications have been set for voltages in the TDMA system.

Usually transients are eliminated by means of various filters, or a voltage regulator is used. When a transient is very sharp, a conventional regulator is not capable of following the transient, and thus it is seen in the regulator output as a greater-than-allowed voltage variation. It is thus difficult by known methods to eliminate transients completely.

German patent application no. DE 3402222 (DE 222) discloses a method of eliminating the effects of voltage transients produced by a part of a circuit by isolating said part from the remainder of the circuit during transient production. However, the method of DE 222 requires comparison of the output of the transient producing part with a reference voltage, the circuit being opened to isolate the transient producing part when the voltage from the transient producing part exceeds the reference voltage. The hysteresis in the comparator will result in fluctuations in the magnitude of the voltage required to open the circuit and isolate the transient producing part from the remainder of the circuit, and thus in fluctuations in the voltage applied to the remainder of the circuit.

According to a first aspect of the invention there is provided a circuit in which the effects of voltage transients are eliminated, the circuit having a current source (5) and parts of which at least one produces transients in the operating voltage, wherein the current source (5) and the transient producing part (2) are coupled on one side of a switching means (4) in the circuit and other parts (1) are coupled on the opposite side of the switching means characterized in that the circuit is operable in burst mode, such that the transient producing part produces a transient signal at predetermined times, and the switching means (4) is actuable, in response to a control signal, in synchronization with the burst mode operation to isolate the current source (5) and the transient producing part (2) from said other parts (1) for the duration of the transient signal.

According to a second aspect of the invention there is provided a method of eliminating the effects of voltage transients in an electrical circuit having a current source (5) and parts of which at least one produces transients in the operating voltage, wherein the current source (5) and the transient producing part (2) are coupled on one side of a switching means (4) in the electrical circuit and other parts (1) are coupled on the opposite side of the switching means (4) characterized in that the electrical circuit operates in burst mode, such that the transient producing part produces a transient signal at predetermined times, the switching means (4) being actuable in synchronization with the burst mode operation to isolate the current source (5) and the transient producing part (2) from said other parts(1) for the duration of the transient signal.

In the method, the current source is thus continuously connected to the block or blocks which take in a current pulse with an abrupt leading edge. The current pulse will produce transients in the terminals of the current source. The switch separates for the duration of the said current taking the current source and the transient-producing blocks entirely from the rest of the system, which during this time receives its operating energy from a separate buffer. When no transients are being produced, the switch closes and connects the current source and the transient producing blocks to the rest of the system and to the buffer. The blocks of the system now receive their operating energy from the current source, which at the same time charges the buffer,

The method is now described in greater detail with reference to the accompanying figures, in which
Figure 1 depicts a diagram of the principle of the method and
Figure 2 is an example of the implementation of the switch.

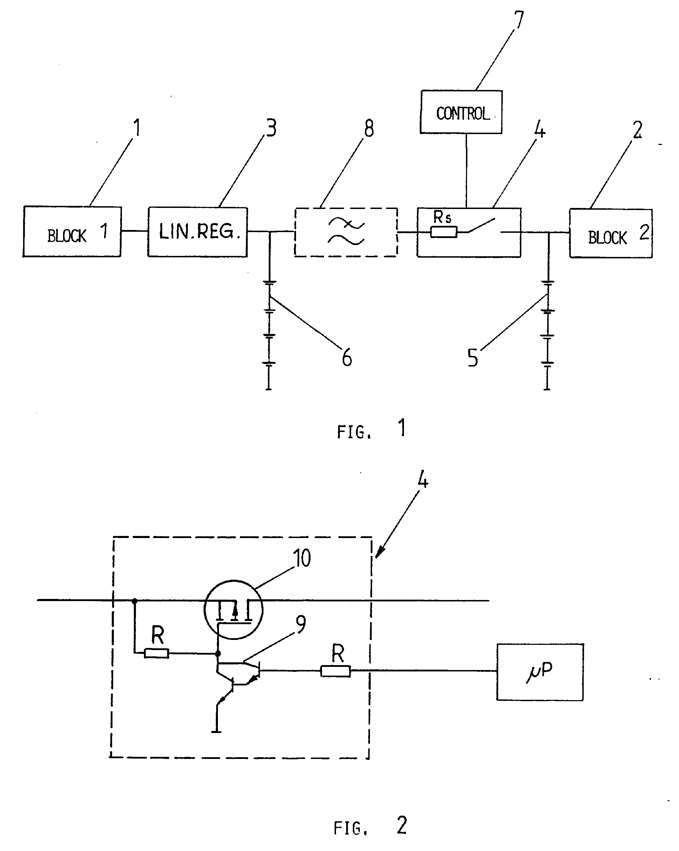

In the diagram of the principle of the method, depicted in Figure 1, block 2 represents in a digital radio telephone a functional block or functional blocks taking in a high pulse-like current the leading edge of the current pulse of which is abrupt. The transmitter part of a radio telephone is such a block. Current is supplied to block 2, as it is to the entire system, by a current source 5, which may be, for example, a battery or an external source of voltage. Block 1 stands for the other functional parts of the radio telephone, such as the receiver, the synthesizer, and the logic unit. The linear regulator 3 regulates voltage to block 1. According to the invention, the system includes a switch 4 and a buffer 6, which serves as an energy storage. The buffer 6 may be any means in which energy can be stored and from which energy can be discharged. Preferably the buffer 6 is a battery, but depending on the application, it may also be a capacitor.

The operation is as follows: In a digital system based on time division multiplexing (TDMA), the transmitter of the radio telephone is on 1/8 T, T being the total time of the cycle. When the transmitter switches on, block 2 in Figure 1 takes in a high pulse-like current having a very abrupt leading edge. The switch control 7 causes the switch 4 to open at the same moment as the functioning time of block 2 begins. Thereupon the transients produced by block 2 are indeed effective at the terminals of the current source 5, but they cannot proceed to block 1, which requires a stable operating voltage. During this time block 1 receives its operating voltage from the buffer 6. When the current-taking by block 2 ends, the control closes the switch 4, whereupon block 1 takes in current from the current source 5. The current source 5 at the same time charges the buffer 6, the voltage of which is somewhat lower than the voltage of the current source 5. The charging will continue until the switch 4 opens before a new current pulse of block 2. The closing of the switch 4 rapidly produces a rising step voltage in block 1. If the switch 4 is implemented as an ideal switch, the leading edge of the step voltage is vertical. In this case the linear regulator 3 is not capable of following the voltage, and its output thereupon shows a peak which cannot be permitted. For this reason, a low-pass filter (shown by dashed lines in Figure 1) is added between the switch 4 and the regulator 3, the low-pass filter delaying the voltage and rounding out its leading edge, whereupon the regulator 3 has time to follow the voltage. When the switch 4 used is a transistor, for example a MOSFET transistor, it is advantageous to regulate it by means of a round-edged control pulse, in which case the rising rate of the voltage at the time of the closing of the switch 4 becomes more gradual and the regulator 3 is capable of correcting the voltage so as to meet the requirements of block 1. The on-resistance of the switch 4 adjusts the height of the charging current of the buffer 6. It is, of course, also possible to use a separate resistance in addition to the resistance of the switch itself, if a lower charging current is desired.

One practical embodiment of the switch 4 is shown in Figure 2. The control for the switch is obtained from the microprocessor of the logic unit of the telephone. Just before the arrival of the current pulse to be taken in by block 2, the control pulse transmitted by the microprocessor drops, whereupon the Darlington-coupled transistor 9 is no longer conductive and the lattice voltage of MOSFET 10 rises and the p-channel closes, i.e. the switch 4 is open. Respectively, when block 2 is no longer taking in current, the control pulse transmitted by the microprocessor opens the MOSFET channel, i.e. the switch 4 closes.

In a radio telephone, the method according to the invention effectively protects from transients caused by some other block those functional blocks which require a stable voltage. Although it is a radio telephone that has been discussed above, the invention can also be applied to other electronic apparatus. The device according to the invention can in practice also be implemented in some other manner than has been described above, while keeping within the protective scope of the claims.

## Claims

1. A circuit in which the effects of voltage transients are eliminated, the circuit having a current source (5) and parts of which at least one produces transients in the operating voltage,
wherein the current source (5) and the transient producing part (2) are coupled on one side of a switching means (4) in the circuit and other parts (1) are coupled on the opposite side of the switching means
characterized in that the circuit is operable in burst mode, such that the transient producing part produces a transient signal at predetermined times, and the switching means (4) is actuable, in response to a control signal, in synchronization with the burst mode operation to isolate the current source (5) and the transient producing part (2) from said other parts (1) for the duration of the transient signal.

2. A circuit according to claim 1, characterized in that the circuit comprises an energy storing buffer (6) which supplies the operating voltage to the other parts (1), during the time that the switching means (4) is open.

3. A circuit according to claim 2, characterized in that the energy storing buffer (6) is a battery.

4. A circuit according to any preceding claim, characterized in that the switching means (4) is a semiconductor switch.

5. A circuit according to claim 4, characterised in that the switching means (4) is microprocessor controlled.

6. A circuit according to any preceding claim, characterized in that the switch is an ideal switch and that a low-pass filter (8) is coupled between the switch and the buffer (6).

7. A method of eliminating the effects of voltage transients in an electrical circuit having a current source (5) and parts of which at least one produces transients in the operating voltage, wherein the current source (5) and the transient producing part (2) are coupled on one side of a switching means (4) in the electrical circuit and other parts (1) are coupled on the opposite side of the switching means (4)
characterized in that the electrical circuit operates in burst mode, such that the transient producing part produces a transient signal at predetermined times, the switching means (4) being actuable in synchronization with the burst mode operation to isolate the current source (5) and the transient producing part (2) from said other parts(1) for the duration of the transient signal.

## Patentansprüche

1. Eine Schaltung, in der die Wirkungen von Spannungsspitzen ausgeschlossen werden, wobei die Schaltung eine Stromquelle (5) und Teile aufweist, von denen wenigstens einer Spannungsspitzen in der Betriebsspannung erzeugt, worin die Stromquelle (5) und der die Spannungsspitzen erzeugende Teil (2) auf einer Seite einer Schaltereinrichtung (4) in der Schaltung gekoppelt sind und andere Teile (1) auf der gegenüberliegenden Seite der Schaltereinrichtung gekoppelt sind,
dadurch gekennzeichnet,
daß die Schaltung in einem Stoß-Modus betreibbar ist derart, daß der die Spannungsspitzen erzeugende Teil ein Spannungsspitzensignal zu vorbestimmten Zeiten erzeugt, und die Schaltereinrichtung (4) in Antwort auf ein Steuersignal synchron mit der Stoß-Betriebsart betätigbar ist, um die Stromquelle (5) und den die Spannungsspitzen erzeugende Teil (2) von den genannten anderen Teilen (1) während der Dauer des Spannungsspitzensignals zu trennen.

2. Eine Schaltung gemäß Anspruch 1, dadurch gekennzeichnet, daß die Schaltung einen Energiespeicherpuffer (6) umfaßt, der die Betriebsspannung zu den anderen Teilen (1) während der Zeit liefert, während der die Schaltereinrichtung (4) offen ist.

3. Eine Schaltung gemäß Anspruch 2, dadurch gekennzeichnet, daß der Energiespeicherpuffer (6) eine Batterie ist.

4. Eine Schaltung gemäß irgendeinem vorhergehenden Anspruch, dadurch gekennzeichnet, daß die Schaltereinrichtung (4) ein Halbleiterschalter ist.

5. Eine Schaltung gemäß Anspruch 4, dadurch gekennzeichnet, daß die Schaltereinrichtung (4) von einem Mikroprozessor gesteuert ist.

6. Eine Schaltung gemäß einem beliebigen, vorhergehenden Anspruch, dadurch gekennzeichnet, daß der Schalter ein idealer Schalter ist und daß ein Tiefpaßfilter (8) zwischen dem Schalter und dem Puffer (6) geschaltet ist.

7. Ein Verfahren zum Ausschließen der Wirkungen von Spannungsspitzen in einer elektrischen Schaltung, die eine Stromquelle (5) und Teile aufweist, von denen wenigstens einer Spannungsspitzen in der Betriebsspannung erzeugt, worin die Stromquelle (5) und der die Spannungspitzen erzeugende Teil (2) auf einer Seite einer Schaltereinrichtung (4) in der elektrischen Schaltung gekoppelt sind und die anderen Teile (1) auf der entgegengesetzten Seite der Schaltereinrichtung (4) gekoppelt sind,
dadurch gekennzeichnet,
daß die elektrische Schaltung in einem Stoß-Modus betrieben wird derart, daß der die Spannungsspitzen erzeugende Teil ein Spannungspitzensignal zu vorbestimmten Zeiten erzeugt, wobei die Schaltereinrichtung (4) synchron mit der Stoß-Modus-Betriebsart betätigbar ist, um die Stromquelle (5) und den die Spannungsspitzen erzeugenden Teil (2) von den genannten anderen Teilen (1) während der Dauer des Spannungsspitzensignals zu trennen.

## Revendications

1. Circuit dans lequel les effets des tensions transitoires sont éliminés, le circuit comportant une source de courant (5) et des parties dont au moins une produit des phénomènes transitoires dans la tension de fonctionnement,
dans lequel la source de courant (5) et la partie produisant des phénomènes transitoires (2) sont couplées sur un côté d'un moyen de commutation (4) dans le circuit et les autres parties (1) sont couplées sur le côté opposé du moyen de commutation,
caractérisé en ce que le circuit peut être mis en oeuvre en mode rafale, de sorte que la partie produisant des phénomènes transitoires produit un système transitoire à des instants prédéterminés, et le moyen de commutation (4) peut être mis en oeuvre en réponse à un signal de commande, en synchronisation avec le fonctionnement en mode rafale pour isoler la source de courant (5) et la partie produisant des phénomènes transitoires (2) des autres parties (1) pendant la durée du signal transitoire.

2. Circuit selon la revendication 1, caractérisé en ce que le circuit comprend un tampon d'emmagasinage d'énergie (6) qui délivre la tension de fonctionnement aux autres parties (1) pendant le temps où le moyen de commutation (4) est ouvert.

3. Circuit selon la revendication 2, caractérisé en ce que le tampon d'emmagasinage d'énergie (6) est une batterie.

4. Circuit selon l'une quelconque des revendications précédentes, caractérisé en ce que le moyen de commutation (4) est un commutateur à semi-conducteur.

5. Circuit selon la revendication 4, caractérisé en ce que le moyen de commutation (4) est commandé par un microprocesseur.

6. Circuit selon l'une quelconque des revendications précédentes, caractérisé en ce que le commutateur est un commutateur idéal et qu'un filtre passe-bas (8) est couplé entre le commutateur et le tampon (6).

7. Procédé pour éliminer les effets des tensions transitoires dans un circuit électrique comportant une source de courant (5) et des parties dont au moins une produit des phénomènes transitoires dans la tension de fonctionnement, dans lequel la source de courant (5) et la partie produisant des phénomènes transitoires (2) sont couplées sur un commande d'un moyen de commutation (4) dans le circuit électrique et les autres parties (1) sont couplées sur le coté opposé du moyen de commutation (4),
caractérisé en ce que le circuit électrique fonctionne en mode rafale, de sorte que la partie produisant des phénomènes transitoires produit un signal transitoire à des instants prédéterminés, le moyen de commutation (4) pouvant être mis en oeuvre en synchronisation avec le fonctionnement en mode rafale pour isoler la source de courant (5) et la partie produisant des phénomènes transitoires (2) des autres parties (1) pendant la durée du signal transitoire.
